# EUROPEAN PATENT APPLICATION

(11) **EP 4 692 601 A1**
(43) Date of publication of application: **11.02.2026**
(21) Application number: 24779692.3
(22) Date of filing: 18.03.2024
(51) Int. Cl.: F16H 57/04

(54) **VEHICLE DRIVE DEVICE**

(30) Priority: 31.03.2023 JP 2023056894
(71) Applicant: AISIN CORPORATION, Kariya-shi, Aichi 448-8650 (JP)
(72) Inventor: FUJIWARA, Kei, Kariya-shi, Aichi 448-8650 (JP); YAMANAKA, Sho, Kariya-shi, Aichi 448-8650 (JP); UENO, Akihiro, Kariya-shi, Aichi 448-8650 (JP)
(74) Representative: Winter, Brandl - Partnerschaft mbB
(86) International application number: PCT/JP2024/010625
(87) International publication number: WO 2024/203567

(57) **Abstract**

Disclosed is a vehicle drive device including: a case; a power transmission mechanism capable of transmitting power from a power source to wheels; and an oil passage structure. The power transmission mechanism includes a rotary shaft member that is disposed in a first housing chamber of the case, extends in an axial direction, and rotates about an axis during power transmission, and a rotating body that is disposed in a second housing chamber of the case, rotates in conjunction with the rotary shaft member, and is capable of scraping up oil accumulated in a lower portion of the housing chamber. The axial end of the rotary shaft member on a side farther from a partition wall portion in the axial direction is supported by the case via a shaft bearing. The oil passage structure includes an axially first through hole formed in the partition wall portion and an oil passage portion extending in the axial direction in the first housing chamber, and supplies oil scraped up by the rotating body in the second housing chamber to the shaft bearing via the first through hole and the oil passage portion.

## Description

### TECHNICAL FIELD

The present disclosure relates to a vehicle drive device.

### BACKGROUND ART

A technique is known in which oil discharged from one of two oil pumps can be supplied to a shaft bearing of a rotor shaft, and oil discharged from the other oil pump can be supplied to a shaft-center oil passage of the rotor shaft.

### CITATIONS LIST

### PATENT LITERATURE

Patent Literature 1: WO 2020/203909 A

### SUMMARY OF INVENTION

### TECHNICAL PROBLEMS

However, since the supply of oil is achieved using a mechanical oil pump driven by a driving force transmitted through a power transmission path, there is a problem in that the drive efficiency of the vehicle drive device decreases due to a loss caused by driving the oil pump.

Therefore, in one aspect, the present disclosure enables supply of oil from a scraping side to a side farther from the scraping side in the axial direction without use of an oil pump driven by a driving force transmitted through a power transmission path.

### SOLUTIONS TO PROBLEMS

In one aspect, there is provided a vehicle drive device including: a case that forms a housing chamber in which oil flows, the housing chamber including a first housing chamber and a second housing chamber adjacent to each other in an axial direction via a partition wall portion; a power transmission mechanism that is disposed in the housing chamber and enables transmission of power from a power source to a wheel; and an oil passage structure, at least a part of which is formed in the case. The power transmission mechanism includes a rotary shaft member that is disposed in the first housing chamber, extends in the axial direction, and rotates about an axis during power transmission, and a rotating body that is disposed in the second housing chamber, rotates in conjunction with the rotary shaft member, and is configured to scrap up oil accumulated in a lower portion of the housing chamber. An axial end of the rotary shaft member on a side farther from the partition wall portion in the axial direction is supported by the case via a shaft bearing. The oil passage structure includes an axially first through hole formed in the partition wall portion and an oil passage portion extending in the axial direction in the first housing chamber, and supplies oil scraped up by the rotating body in the second housing chamber to the shaft bearing via the first through hole and the oil passage portion.

### ADVANTAGEOUS EFFECTS OF INVENTION

In one aspect, according to the present disclosure, it is possible to supply oil from a scraping side to a side farther from the scraping side in the axial direction without use of an oil pump driven by a driving force transmitted through a power transmission path.

### BRIEF DESCRIPTION OF DRAWINGS

FIG. 1 is a schematic top view showing an installation state of a vehicle drive device in a vehicle.
FIG. 2 is a schematic cross-sectional view of a main part of a vehicle drive device according to a first embodiment.
FIG. 2A is a skeleton diagram showing the vehicle drive device.
FIG. 2B is a diagram schematically showing the flow of oil in the vehicle drive device according to the first embodiment.
FIG. 3 is a view schematically showing a part of a motor case according to the first embodiment as viewed from an axially first side A1.
FIG. 4 is a view schematically showing a part of a cover member according to the first embodiment as viewed from an axially second side A2.
FIG. 5 is a perspective view schematically showing a part of a cover member according to the first embodiment as viewed from the axially second side A2.
FIG. 6 is a cross-sectional view of a main part of an oil passage structure in a case according to the first embodiment.
FIG. 7 is a cross-sectional view of a main part of a vehicle drive device according to a second embodiment.
FIG. 7A is a diagram schematically showing the flow of oil in the vehicle drive device according to the second embodiment.
FIG. 8 is a plan view schematically showing a part of a motor case according to the second embodiment as viewed in the axial direction from the axially first side A1.
FIG. 9 is a perspective view showing a part of the motor case (around a portion Q81 in FIG. 8) according to the second embodiment.
FIG. 10 is a perspective view showing a part of the motor case (around a portion Q82 in FIG. 8) according to the second embodiment.
FIG. 11 is a perspective view of a cover member according to the second embodiment as viewed from the axially second side A2.
FIG. 11A is a perspective view showing a part of the cover member (around a portion Q11 in FIG. 11) according to the second embodiment.
FIG. 12 is a cross-sectional view taken along a plane (a plane perpendicular to the X direction) passing through a tubular portion formed in a bottom portion of the cover member according to the second embodiment.
FIG. 13 is a perspective view showing a part of the cover member (around a portion Q13 in FIG. 8) according to the second embodiment.
FIG. 14 is a cross-sectional view of a main part of an oil passage structure in a case according to the second embodiment, schematically showing the flow of oil to a bearing by arrows
FIG. 15 is a cross-sectional view of a main part of the oil passage structure in a case according to the second embodiment, schematically showing the flow of oil to a bearing 245 by arrows.

### DESCRIPTION OF EMBODIMENTS

Hereinafter, each embodiment will be described in detail with reference to the accompanying drawings. Note that the dimensional ratios in the drawings are merely examples, and the dimensional ratios are not limited thereto, and the shapes and the like in the drawings may be partially exaggerated for convenience of description. In the drawings, only some of a plurality of sections with the same attribute may be denoted by reference numerals for the sake of clarity.

The directions of the respective members in the following description represent directions in a state where those members are assembled to a vehicle drive device 100. In addition, terms related to a dimension, placement direction, placement position, and the like for each member are concepts that include states having differences due to errors (errors within an allowable in manufacturing).

In the present specification, the term "drive-coupled" refers to a state in which two rotary elements are coupled to each other to transmit a driving force (synonymous with torque), and includes a state in which the two rotary elements are coupled to each other so as to rotate integrally, or a state in which the two rotary elements are coupled to each other to transmit a driving force via one or two or more transmission members. Such transmission members include various members (e.g., shaft, gear mechanism, belt, chain, etc.) that transmit rotation at the same speed or at variable speeds. Note that the transmission members may include an engagement device (e.g., friction engagement device, meshing engagement device, etc.) that selectively transmits rotation and a driving force may be included as the transmission member.

In the present specification, the "rotary electric machine" is used as a concept that includes any of a motor (electric motor), a generator (electric generator), and a motor-generator that performs both functions of the motor and the generator as necessary. In the present specification, with regard to the placement of two members, "overlapping as viewed in a specific direction" means that when an imaginary straight line parallel to the viewing direction is moved in each direction orthogonal to the imaginary straight line, a region where the imaginary straight line intersects both of the two members at least partially exists. Further, in the present specification, with regard to the placement of two members, "placement regions in a specific direction overlap" means that a placement region of one member in the specific direction includes at least a part of a placement region of the other member in the specific direction.

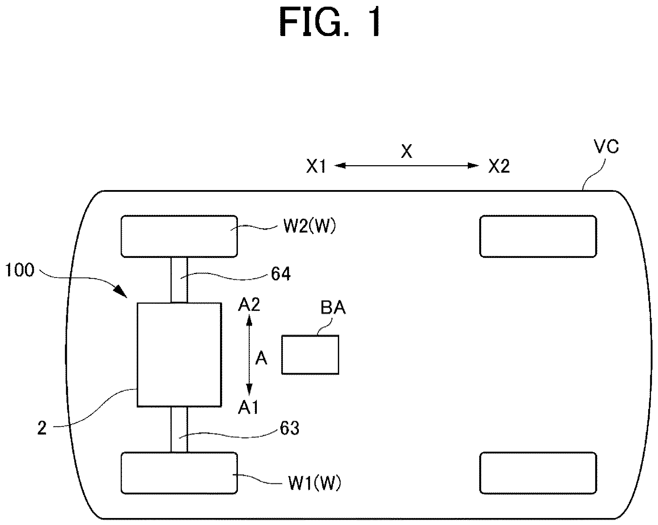

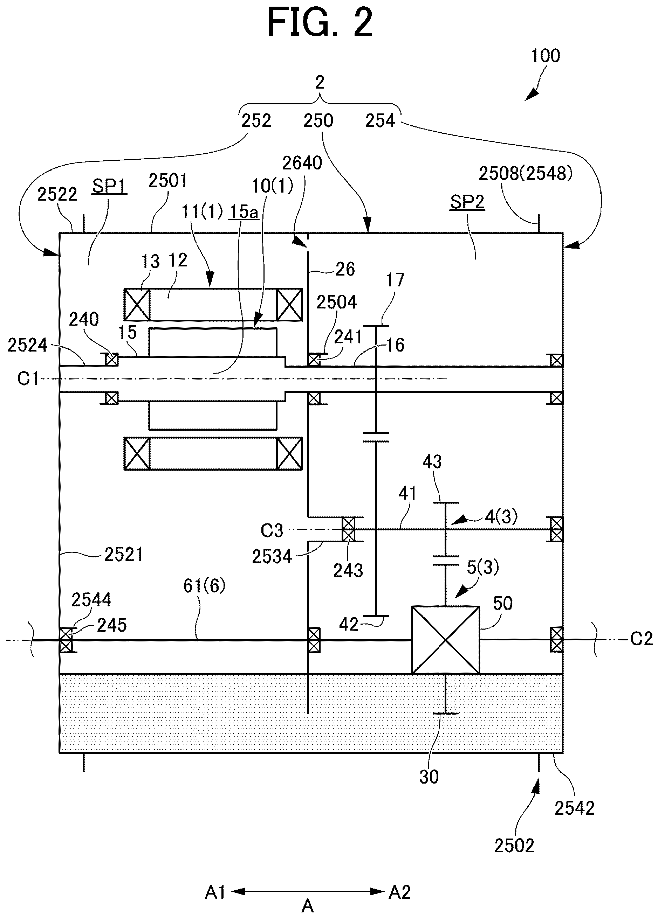

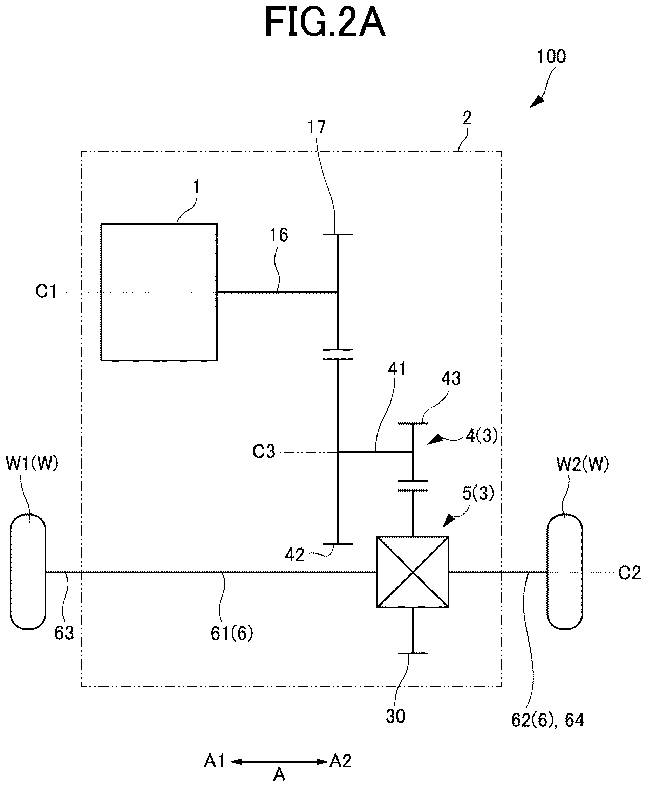

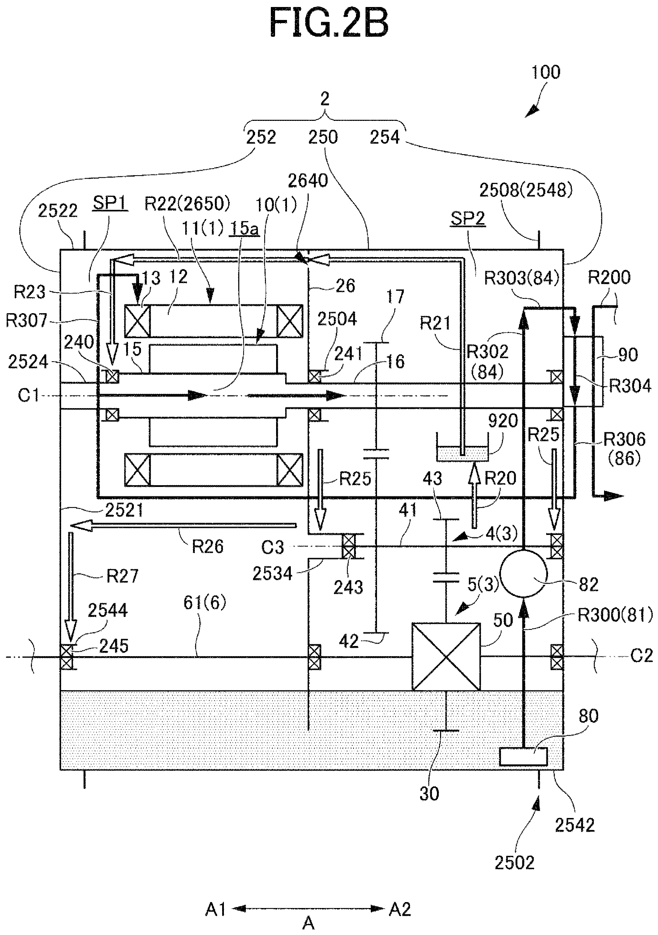

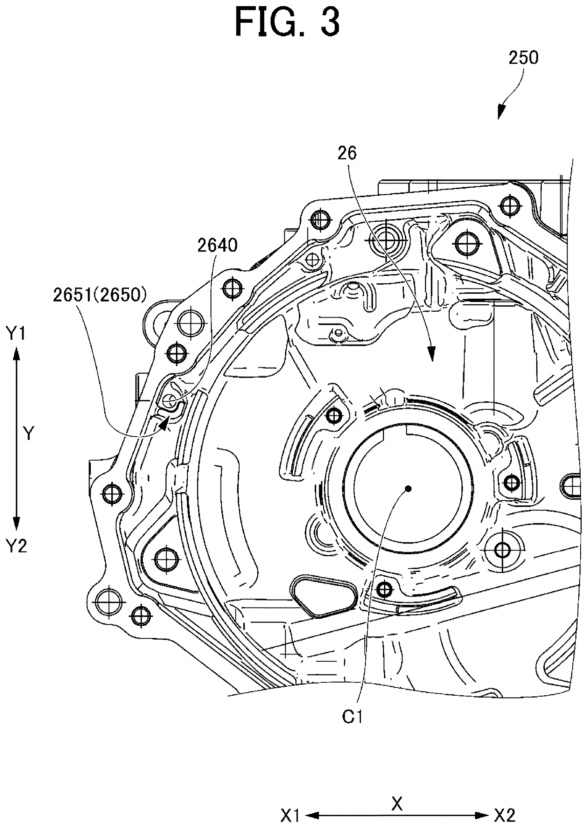

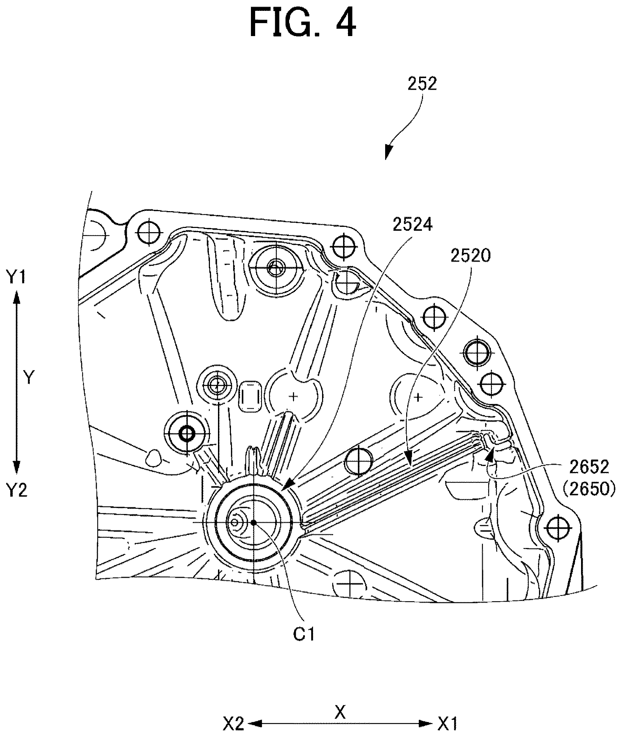

FIG. 1 is a schematic top view showing an installation state of a vehicle drive device 100 in a vehicle VC. FIG. 2 is a cross-sectional view of a main part of the vehicle drive device 100. FIG. 2A is a skeleton diagram showing the vehicle drive device 100. FIG. 2B is a diagram schematically showing the flow of oil in the vehicle drive device 100 according to a present embodiment. In FIG. 2B, the oil accumulated in a lower portion of a case 2 (a lower portion of a housing chamber SP) is schematically shown by a hatched region, and the flow of oil is schematically shown by an arrow R21 and the like. FIG. 3 is a view schematically showing a part of a motor case 250 as viewed from an axially first side A1. FIG. 4 is a view schematically showing a part of a cover member 252 as viewed from an axially second side A2.

In FIGS. 3 and 4, a first direction X and a second direction Y are defined. The first direction X, the second direction Y, and an axial direction A are three axial directions orthogonal to each other, and the second direction Y has a component in the vertical direction. In this case, the second direction Y may be parallel to the gravity direction (perpendicular direction) or may be inclined in the installed state of the vehicle drive device 100 in the vehicle VC. For example, the vehicle drive device 100 may be installed in the vehicle VC in a direction in which a second direction first side Y1 is the upper side and a second direction second side Y2 is the lower side. The vehicle drive device 100 may be installed in the vehicle VC in a direction in which a first direction first side X1 is the front side (the front side in the vehicle front-rear direction) and a first direction second side X2 is the rear side (the rear side in the vehicle front-rear direction). As shown in FIG. 1, the vehicle drive device 100 may be installed on the front side of the central portion in the vehicle front-rear direction of the vehicle VC, or may be installed on the rear side of the central portion in the vehicle front-rear direction of the vehicle VC. When the vehicle drive device 100 is installed on the rear side of the central portion in the vehicle front-rear direction of the vehicle VC as described above, a pair of wheels W driven by the vehicle drive device 100 may be, for example, a pair of left and right rear wheels.

When the vehicle VC includes a pair of left and right front wheels and a pair of left and right rear wheels, one of the pair of left and right front wheels and the pair of left and right rear wheels that is not driven by the vehicle drive device 100 (in the example shown in FIG. 1, a pair of left and right rear wheels) may be driven by a drive device other than the vehicle drive device 100. The drive device other than the vehicle drive device 100 is, for example, a drive device configured to transmit output torque of an internal combustion engine to a pair of wheels to be driven, a drive device configured to transmit output torque of a rotary electric machine (a rotary electric machine different from the rotary electric machine 1 included in the vehicle drive device 100) to a pair of wheels to be driven, or a drive device configured to transmit output torque of both the internal combustion engine and the rotary electric machine (a rotary electric machine different from the rotary electric machine 1 included in the vehicle drive device 100) to a pair of wheels to be driven. The drive device other than the vehicle drive device 100 may be a drive device having the same configuration as the vehicle drive device 100.

In the present embodiment, as schematically shown in FIGS. 1 and 2A, the vehicle drive device 100 includes the rotary electric machine 1, a pair of output members 6 that is drive-coupled to the pair of wheels W (see FIG. 1), and a transmission mechanism 3 that transmits a driving force between the rotary electric machine 1 and the pair of output members 6. The vehicle drive device 100 further includes the case 2 that houses the rotary electric machine 1. The case 2 also houses the pair of output members 6 and the transmission mechanism 3.

A first output member 61, which is one of the pair of output members 6, is drive-coupled to a first wheel W1, which is one of the pair of wheels W, and a second output member 62, which is the other of the pair of output members 6, is drive-coupled to a second wheel W2, which is the other of the pair of wheels W. As shown in FIG. 1, the vehicle VC in which the vehicle drive device 100 is installed includes a first drive shaft 63 that rotates integrally with the first wheel W1 and a second drive shaft 64 that rotates integrally with the second wheel W2. The first drive shaft 63 is coupled to the first wheel W1 via, for example, a constant velocity joint, and the second drive shaft 64 is coupled to the second wheel W2 via, for example, a constant velocity joint. Then, the first output member 61 is coupled to the first drive shaft 63 so as to rotate integrally with the first drive shaft 63, and the second output member 62 is coupled to the second drive shaft 64 so as to rotate integrally with the second drive shaft 64.

The vehicle drive device 100 transmits the output torque of the rotary electric machine 1 to the pair of wheels W via the pair of output members 6 to cause the vehicle VC in which the vehicle drive device 100 is installed to travel. That is, the rotary electric machine 1 is a driving force source for the pair of wheels W. The pair of wheels W is a pair of left and right wheels (e.g., a pair of left and right front wheels or a pair of left and right rear wheels) in the vehicle VC. The rotary electric machine 1 may be, for example, an alternating-current (AC) rotary electric machine that is driven by three-phase AC. The rotary electric machine 1 is electrically connected to a battery BA (including a power storage device such as a capacitor) via an inverter device (not shown) that performs power conversion between direct-current (DC) power and AC power, and performs powering by receiving power supply from the battery BA, or supplies power generated by the inertial force or the like of the vehicle VC to the power storage device to store the power.

As shown in FIG. 2, the rotary electric machine 1 and the pair of output members 6 are disposed separately on two axes (specifically, a first axis C1 and a second axis C2) parallel to each other. Specifically, the rotary electric machine 1 is disposed on the first axis C1, and the pair of output members 6 is disposed on the second axis C2 different from the first axis C1. The first axis C1 and the second axis C2 are axes (virtual axes) arranged parallel to each other. The transmission mechanism 3 includes an output gear (ring gear) 30, which is drive-coupled to at least one of the pair of output members 6, coaxially with the pair of output members 6 (i.e., on the second axis C2).

As shown in FIG. 1, the vehicle drive device 100 is installed in the vehicle VC in a direction in which the axial direction A is along the vehicle left-right direction. The axial direction A is a direction parallel to the first axis C1 and the second axis C2, in other words, an axial direction common between the first axis C1 and the second axis C2. That is, the axial direction A is a direction in which the rotary axis of the rotary electric machine 1 extends, and is also a direction in which the rotary axis of the pair of output members 6 extends. Here, one side in the axial direction A is defined as the axially first side A1, and the other side in the axial direction A (a side opposite to the axially first side A1 in the axial direction A) is defined as the axially second side A2. The axially first side A1 is a side on which the rotary electric machine 1 is disposed relative to the transmission mechanism 3 in the axial direction A. As shown in FIG. 2A, the first output member 61 is the output member 6 disposed on the axially first side A 1 out of the pair of output members 6, and the second output member 62 is the output member 6 disposed on the axially second side A2 out of the pair of output members 6.

As shown in FIG. 1, the vehicle drive device 100 may be installed in the vehicle VC in a direction in which the axially first side A1 is the vehicle left side and the axially second side A2 is the vehicle right side. In this case, the first wheel W1 to which the first output member 61 is drive-coupled is a left wheel, and the second wheel W2 to which the second output member 62 is drive-coupled is a right wheel. In FIG. 1, it is assumed that the vehicle drive device 100 is a front-wheel-drive type drive device that drives a pair of left and right front wheels. Therefore, in the example shown in FIG. 1, the first wheel W1 is a left front wheel, and the second wheel W2 is a right front wheel.

As shown in FIG. 2, the rotary electric machine 1 includes a rotor 10 and a stator 11. The stator 11 is fixed to the case 2, and the rotor 10 is supported by the case 2 so as to be rotatable relative to the stator 11. The rotary electric machine 1 may be an inner rotor type rotary electric machine, and in this case, the rotor 10 may be disposed on the inner side in the radial direction relative to the stator 11 so as to overlap the stator 11 as viewed in the radial direction along the radial direction. Here, the radial direction is a radial direction with reference to the first axis C1, in other words, a radial direction with reference to the rotary axis of the rotary electric machine 1.

The stator 11 includes a stator core 12 and a coil end portion 13 protruding from the stator core 12 in the axial direction A. A coil is wound around the stator core 12, and a portion of the coil protruding from the stator core 12 in the axial direction A forms the coil end portion 13. The coil end portions 13 are formed on both sides in the axial direction A relative to the stator core 12.

The transmission mechanism 3 includes a counter gear mechanism 4 in a power transmission path between the rotary electric machine 1 and an output gear 30. In a modification, a reduction mechanism using planetary gears, or the like, may be used instead of the counter gear mechanism 4. In this case, instead of the three-axis configuration, a two-axis configuration in which a third axis C3 is eliminated may be implemented.

In the present embodiment, the counter gear mechanism 4 is disposed on an axis offset from an input member 16, which is coaxial with the rotary electric machine 1 (i.e., the third axis C3). Note that the input member 16 is coupled to the rotor 10 so as to rotate integrally with the rotor 10. In the example shown in FIG. 2, the vehicle drive device 100 includes a rotor shaft 15 to which the rotor 10 is fixed, and the input member 16 is coupled to the rotor shaft 15 so as to rotate integrally with the rotor shaft 15. Specifically, a portion of the input member 16 on the axially first side A1 may be coupled (here, spline-coupled) to a portion of the rotor shaft 15 on the axially second side A2. Unlike such a configuration, the rotor shaft 15 of the vehicle drive device 100 can be formed integrally with the input member 16 as a single piece.

The counter gear mechanism 4 includes a counter shaft 41, a first counter gear 42, and a second counter gear 43.

The counter shaft 41 is a rotary shaft member that rotates about the third axis C3. The third axis C3 extends parallel to the first axis C1. The first counter gear 42 is an input element of the counter gear mechanism 4. The first counter gear 42 meshes with an input gear 17 of the input member 16. The first counter gear 42 is coupled to the counter shaft 41 so as to rotate integrally with the counter shaft 41.

The second counter gear 43 is an output element of the counter gear mechanism 4. In the present embodiment, as an example, the second counter gear 43 is formed to have a smaller diameter than the first counter gear 42. The second counter gear 43 is provided on the counter shaft 41 so as to rotate integrally with the counter shaft 41.

A differential gear mechanism 5 is disposed on the second axis C2 as the rotary axis. The differential gear mechanism 5 distributes the driving force transmitted from the rotary electric machine 1 side to the pair of output members 6. The differential gear mechanism 5 may be disposed coaxially with the pair of output members 6 (i.e., on the second axis C2). The differential gear mechanism 5 distributes the driving force transmitted from the rotary electric machine 1 side to the output gear 30 to the pair of output members 6. That is, the output gear 30 is drive-coupled to both of the pair of output members 6 via the differential gear mechanism 5. Note that the differential gear mechanism 5 may be a bevel-gear type differential gear mechanism, and the output gear 30 may be coupled to a differential case portion 50 included in the differential gear mechanism 5 so as to rotate integrally with the differential case portion 50.

Here, the configuration of the case 2 will be further described with reference to FIG. 2.

The case 2 may be formed of, for example, aluminum. The case 2 can be formed by casting or the like. The case 2 includes the motor case 250, the cover member 252, and a gear case member 254.

As shown in FIG. 2, the motor case 250 forms a motor housing chamber SP1 that houses the rotary electric machine 1. Note that the motor housing chamber SP1 may be an oil-tight space containing oil for cooling and/or lubricating the rotary electric machine 1 (and/or the transmission mechanism 3). The motor case 250 has a form including a peripheral wall portion 2501 that surrounds the radial outside of the rotary electric machine 1. The motor case 250 may be implemented by coupling a plurality of members.

In the example shown in FIG. 2, the motor case 250 includes a partition wall portion 26 that partitions the motor housing chamber SP1 and a gear housing chamber SP2 in the axial direction A. The partition wall portion 26 faces a bottom portion 2521 (described later) of the cover member 252 in the axial direction A. A through hole 2640 in the axial direction A, which will be described later, is formed in the partition wall portion 26. The through hole 2640 is provided to allow the oil in the gear housing chamber SP2 to flow into the motor housing chamber SP1, as described later.

On the axially second side A2 of the partition wall portion 26, a coupling portion 2502 with the gear case member 254, a bearing support portion 2504 that supports a bearing 241, and the like are formed. Further, on the axially second side A2 of the partition wall portion 26, a bearing support portion 2534 that supports a bearing 243 is formed. Note that the bearing support portion 2534 is formed concentrically about the third axis C3. As shown in FIG. 2, the bearing 243 is provided on the radially outer side at the end of the counter shaft 41 on the axially first side A1. Specifically, in the bearing 243, the radially outer side of an outer race is supported by the bearing support portion 2534, and the radially inner side of an inner race is supported by the outer peripheral surface of the counter shaft 41. Note that the bearing 243 may be supplied with the oil flowing along the partition wall portion 26 by its own weight, as shown by an arrow R25 in FIG. 2B.

The cover member 252 is coupled to the axially first side A1 of the motor case 250. The cover member 252 is in the form of a cover that covers the axially first side A1 in the motor housing chamber SP1. Here, the cover member 252 may cover the opening on the axially first side A1 of the motor case 250 in such a manner as to close the opening completely or substantially completely. Note that a part of the axially first side A1 of the motor housing chamber SP1 may be formed by the cover member 252.

The cover member 252 is provided with a bearing 240 that rotatably supports the rotor 10. That is, the cover member 252 includes a bearing support portion 2524 that supports the bearing 240.

As shown in FIG. 2, the bearing 240 is provided on the radially inner side at the end of the rotor shaft 15 on the axially first side A1. Specifically, in the bearing 240, the radially outer side of an outer race is supported by the inner peripheral surface of the rotor shaft 15, and the radially inner side of an inner race is supported by the cover member 252. As shown in FIG. 2, the bearing 241 is provided on the radially outer side at the end of the rotor shaft 15 on the axially second side A2. Specifically, in the bearing 241, the radially outer side of an outer race is supported by the partition wall portion 26, and the radially inner side of an inner race is supported by the outer peripheral surface of the rotor shaft 15.

In the example shown in FIG. 2, the cover member 252 includes the circular bottom portion 2521 centered on the first axis C1 and a peripheral wall portion 2522 protruding from the outer peripheral edge of the bottom portion 2521 toward the axially second side A2, and the end surface of the peripheral wall portion 2522 on the axially second side A2 is coupled to the motor case 250. A cylindrical bearing support portion 2524 protruding to the axially second side A2 is formed at a central portion (a portion centered on the first axis C1) of the bottom portion 2521 on the axially second side A2. Note that the bearing support portion 2524 is formed concentrically about the first axis C1.

The gear case member 254 forms a gear housing chamber SP2 that houses the transmission mechanism 3. Note that the gear housing chamber SP2 may be an oil-tight space communicating with the motor housing chamber SP1. The gear case member 254 is coupled to the axially second side A2 of the motor case 250. In the present embodiment, the gear case member 254 is coupled to the motor case 250 in such a manner that at the coupling portion 2502, a mating surface 2548 comes into contact with a corresponding mating surface 2508 of the motor case 250 in the axial direction A. The gear case member 254 is in the form of a cover that covers the axially second side A2 in the gear housing chamber SP2 in a manner including the peripheral wall portion 2542 that surrounds the radially outer side of the transmission mechanism 3. The gear case member 254 may be implemented by coupling a plurality of members. Note that a part of the axially first side A1 of the gear housing chamber SP2 may be formed by the motor case 250.

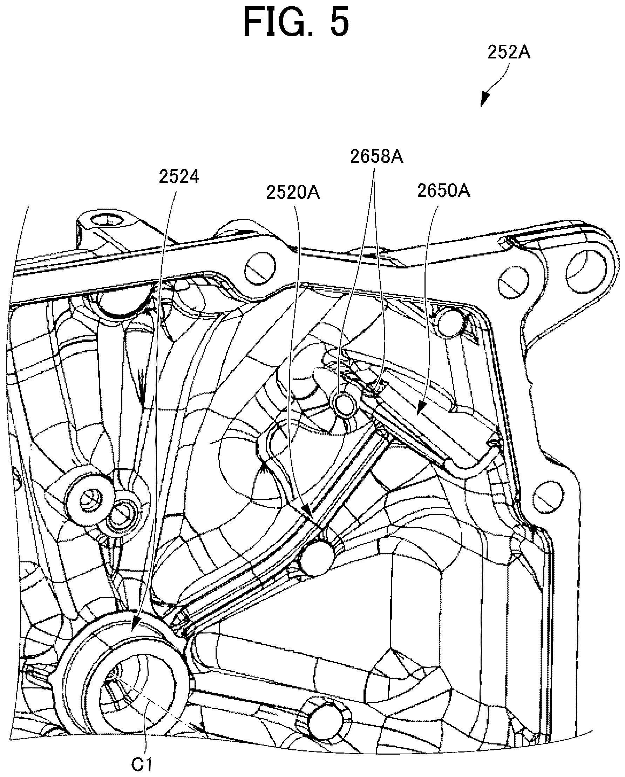

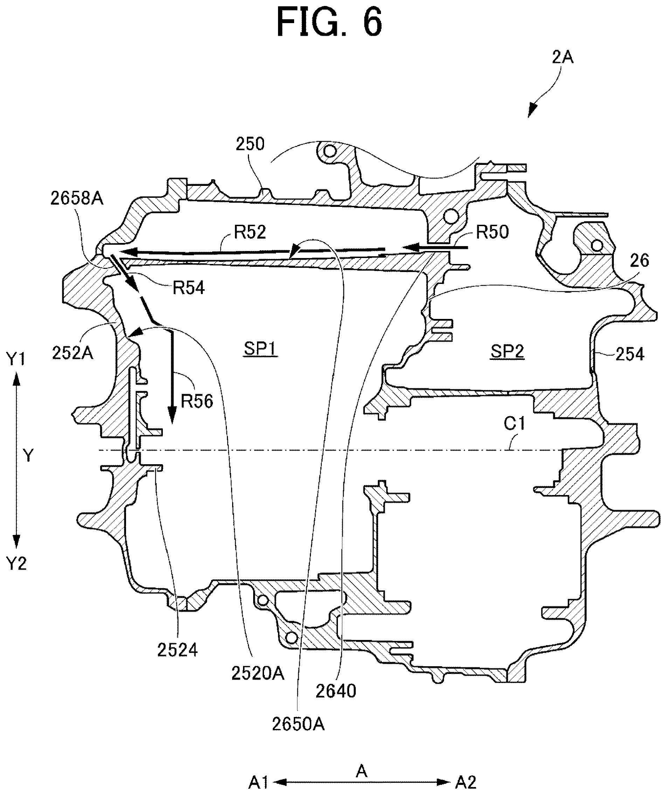

Next, an oil passage structure in the present embodiment will be described with reference to FIG. 2B and FIG. 3 and subsequent drawings. In the following description, when the motor housing chamber SP1 and the gear housing chamber SP2 described above are not particularly distinguished, these chambers are also simply referred to as a housing chamber SP. FIGS. 5 and 6 are explanatory views of a cover member 252A according to a modification, and FIG. 5 is a perspective view schematically showing a part of the cover member 252A as viewed from the axially second side A2. FIG. 6 is a cross-sectional view of a main part of an oil passage structure in a case 2A.

In the present embodiment, oil is circulated in the vehicle drive device 100 not only by a so-called forced lubrication method using an oil pump (mechanical or electric oil pump 82), but by a combination with a lubrication method (natural lubrication method) in which oil is scraped up by rotation of a gear for lubrication (see an arrow R20 in FIG. 2B). However, in a modification, only the forced lubrication method may be implemented.

Specifically, in the present embodiment, the oil accumulated in the lower portion in the housing chamber SP is scraped up by the rotation of the output gear 30 (so-called differential ring) of the differential gear mechanism 5 (see an arrow R20 in FIG. 2B) and supplied to various objects to be lubricated. For example, the oil in the gear housing chamber SP2 is pumped up by the electric oil pump 82 via a strainer 80 and an oil passage 81 (arrows R300, R302) and cooled via an oil cooler 90 that may be provided in the gear case member 254 (arrows R303, R304, etc.). In FIG. 2B, lines 81 and 84 with arrows each schematically represent the oil passage to the oil cooler 90, and an arrow R200 represents the flow of cooling water. The oil from the electric oil pump 82 may be supplied to a shaft-center oil passage 15a of the rotor shaft 15 and the coil end portion 13 via the oil passage 86 (see arrows R306, R307).

In the present embodiment, a catch tank 920 is provided in the gear housing chamber SP2 as schematically shown in FIG. 2B. Note that the capacity of the catch tank 920 is arbitrary and may be relatively small. In addition to the catch tank 920, another catch tank having a relatively large capacity may be provided. The catch tank 920 is not necessarily a tank into which the oil scraped up by the output gear 30 directly enters, and may be a tank into which the oil scattered on the inner surface of the case 2 enters along the inner surface by its own weight or the like. The oil in the housing chamber SP may be scraped up by a rotating body (e.g., another gear or a fin) other than the output gear 30.

In the present embodiment, the through hole 2640 (see FIG. 3) in the axial direction A is formed in the partition wall portion 26. The through hole 2640 of the partition wall portion 26 communicates with the catch tank 920, and the oil in the catch tank 920 is supplied (see also an arrow R21 in FIG. 2B). A part of the oil supplied to the partition wall portion 26 can pass through the through hole 2640 and enter the motor housing chamber SP1. In a modification, the through hole 2640 may function to guide the oil flowing along the partition wall portion 26 from the gear housing chamber SP2 side to the motor housing chamber SP1 side without passing through the catch tank 920.

In the present embodiment, a gutter portion 2650 extending in the axial direction A is disposed in the motor housing chamber SP1. The gutter portion 2650 may be formed of a tubular member separate from the case 2, but is preferably formed in the case 2. In the present embodiment, the gutter portion 2650 is formed on the inner peripheral surface of the motor case 250 and the cover member 252 (the surface bounding the radially outer side of the motor housing chamber SP1) in a manner continuous in the axial direction A. Specifically, the gutter portion 2650 includes a section 2651 formed in the motor case 250 and a section 2652 formed in the cover member 252, and these sections 2651, 2652 are continuous in the axial direction A. Here, the gutter portion 2650 can be formed integrally with the case 2, and the number of parts and the number of manufacturing processes can be reduced compared to the case where a tubular member is provided separately. Note that a seal member may be disposed between the axial end surfaces of the section 2651 and the section 2652 aligned in the axial direction A, but the seal member may be omitted.

The gutter portion 2650 has a function of guiding the oil entering the motor housing chamber SP1 from the through hole 2640 to the cover member 252 (see also an arrow R22 in FIG. 2B). For this purpose, the gutter portion 2650 may extend in the horizontal direction, but may be inclined in such a manner that the axially first side A1 is on the lower side (second direction second side Y2) relative to the axially second side A2. In this case, even when the orientation of the vehicle changes to the assumed inclined orientation, the inclination angle may be set so that the axially first side A1 is on the lower side relative to the axially second side A2.

The gutter portion 2650 extends above the first axis C1 and extends significantly above the bearing support portion 2524. As can be seen from each of FIGS. 3 and 4, the gutter portion 2650 has a form recessed downward (to the second direction second side Y2) in a cross-sectional view taken along a plane perpendicular to the axial direction A (i.e., XY plane). The gutter portion 2650 may extend in a substantially equal recessed cross section along the axial direction A (a cross section cut along the XY plane).

The gutter portion 2650 may extend in the axial direction A to the partition wall portion 26 on the axially second side A2. The end of the gutter portion 2650 on the partition wall portion 26 side (i.e., the end on the axially second side A2) communicates with the through hole 2640 of the partition wall portion 26. For example, the gutter portion 2650 may be provided below the through hole 2640. At this time, the gutter portion 2650 may be disposed relative to the through hole 2640 in such a manner that at least a part of the recessed cross section overlaps the through hole 2640 as viewed in the axial direction A.

The gutter portion 2650 may extend in the axial direction A to the bottom portion 2521 of the cover member 252 on the axially first side A1. The end of the gutter portion 2650 on the bottom portion 2521 side (i.e., the end on the axially first side A1) may communicate with a groove portion 2520 of the cover member 252. The groove portion 2520 of the cover member 252 extends in the radial direction with reference to the first axis C1 as viewed in the axial direction A. The end of the groove portion 2520 on the radially outer side communicates with the axially first side A1 of the gutter portion 2650. The end of the groove portion 2520 on the radially inner side is connected to the bearing support portion 2524. The groove portion 2520 functions to guide oil that drips from the gutter portion 2650 by its own weight to the bearing 240 via the bearing support portion 2524 (see also an arrow R23 in FIG. 2B). The radially inner side of the groove portion 2520 may terminate at a position in the vicinity of, but not reaching, the bearing support portion 2524.

Note that the end of the gutter portion 2650 on the bottom portion 2521 side (i.e., the end on the axially first side A1) may be opened radially inward by a notch or the like to promote the flow of oil from the gutter portion 2650 to the groove portion 2520. In this case, of the oil flowing through the gutter portion 2650, the amount of oil that can be guided to the bearing 240 via the groove portion 2520 can be effectively increased.

Alternatively, as in a modification shown in FIGS. 5 and 6, a gutter portion 2650A may have a through hole 2658A at the end on the bottom portion 2521 side. In this case, one end of the through hole 2658A may open at the bottom portion of the recessed cross section of the gutter portion 2650A, and the other end may open downward or obliquely downward in a manner facing the second direction second side Y2. In this case, the end of a groove portion 2520A on the radially outer side may be disposed below the through hole 2658A (second direction second side Y2). In this case as well, of the oil flowing through the gutter portion 2650, the amount of oil that can be guided to the bearing 240 via the groove portion 2520A can be effectively increased.

In FIG. 6, the flow of oil according to the modification is schematically shown by arrows R50, R52, R54, R56. In a modification, as described above, oil can be guided to the groove portion 2520A via the through hole 2658A.

In the present embodiment, the groove portion 2520 has a form recessed in the axial direction A on the axially first side A1. In this case, oil can move obliquely downward (toward the bearing 240), as viewed in the axial direction A, along the lower surface of the upper section of the groove portion 2520 (the section serving as a shelter). However, in a modification, the groove portion 2520A may have a form recessed downward (to the second direction second side Y2), like the gutter portion 2650.

As described above, according to the present embodiment, the oil scraped up above the bearing 240 in the gear housing chamber SP2 or the oil adhering to the upper portion (the second direction first side Y1) of the case 2 can be brought to the motor housing chamber SP1 side via the through hole 2640, and then guided to the bearing 240 via the gutter portion 2650 and the groove portion 2520. The movement of the oil at this time is caused by its own weight (positional energy) and can be achieved without use of an oil pump. Therefore, according to the present embodiment, it is possible to supply oil to a side farther from the scraping side (gear housing chamber SP2) in the axial direction A without use of an oil pump.

In the present embodiment, preferably, the same oil supply mechanism is also applied to the bearing 245 (see FIG. 2 and the like) that supports the end of the output member 6 on the axially first side A1 in the motor housing chamber SP1. In this case, the oil in the gear housing chamber SP2 can be supplied to a gutter portion (not shown) corresponding to the gutter portion 2650 via a through hole (not shown) of the partition wall portion 26 as schematically shown by an arrow R26 in FIG. 2B (see a second embodiment to be described later). Then, the oil can be supplied from the gutter portion to the bearing 245 or a bearing support portion 2544 thereof (a part of the cover member 252) via a groove portion (not shown) corresponding to the groove portion 2520 (see the second embodiment to be described later). In this manner, the oil in the gear housing chamber SP2 can be supplied to the plurality of bearings on the axially first side A1 in the motor housing chamber SP1 via the gutter portions and the like of different series.

Next, the above embodiment will be distinguished as a "first embodiment", and another embodiment (hereinafter referred to also as a "second embodiment") will be described.

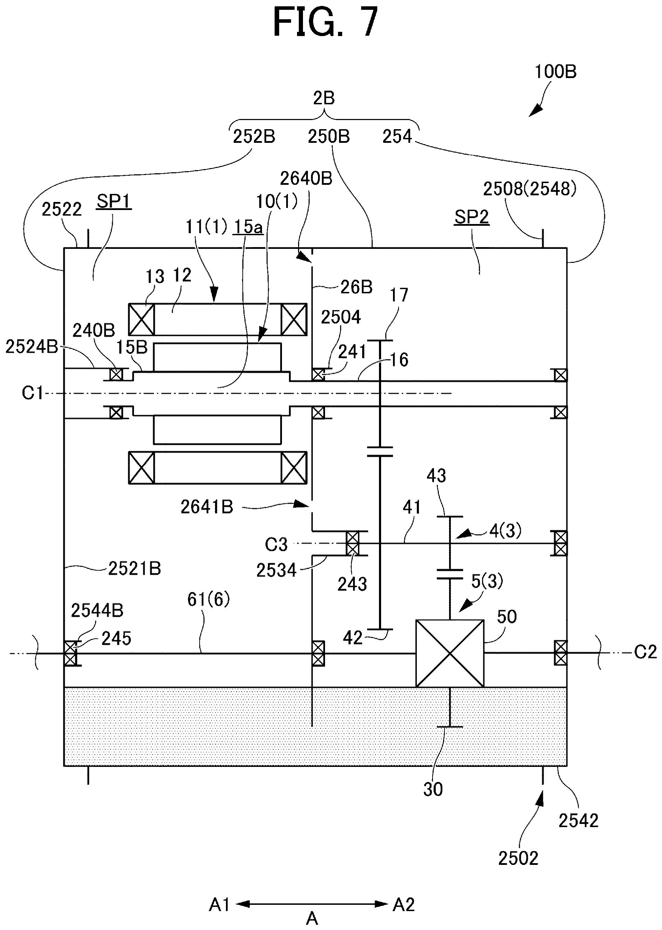

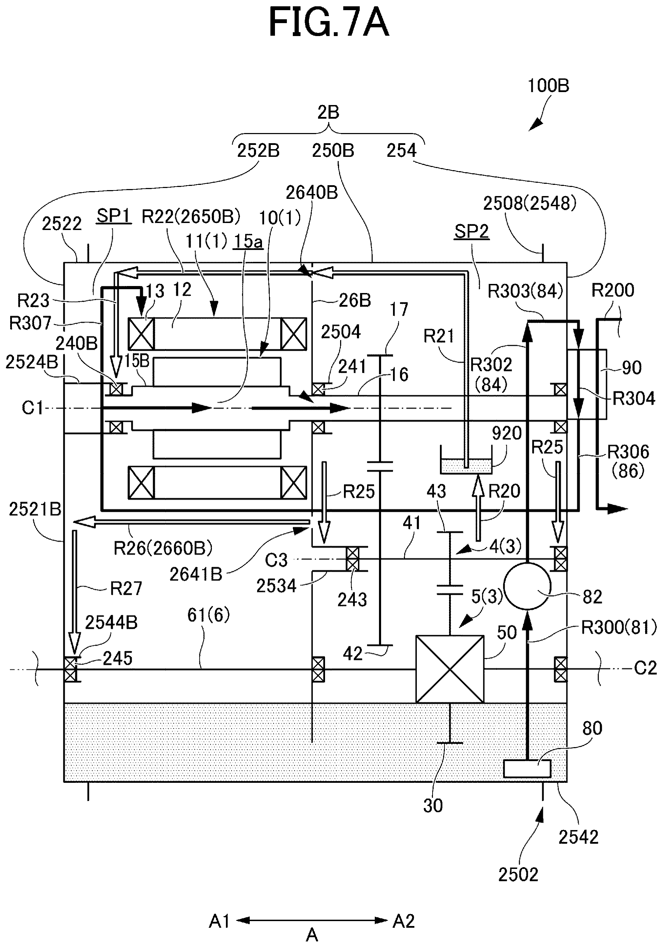

FIG. 7 is a cross-sectional view of a main part of a vehicle drive device 100B according to the second embodiment. FIG. 7A is a diagram schematically showing the flow of oil in the vehicle drive device 100B according to the second embodiment.

The vehicle drive device 100B according to the present embodiment differs from the vehicle drive device 100 according to the first embodiment described above mainly in that the case 2 is replaced with a case 2B.

The case 2B according to the present embodiment differs from the case 2 according to the first embodiment described above in that the motor case 250 and the cover member 252 are replaced with a motor case 250B and a cover member 252B.

The motor case 250B according to the present embodiment differs from the motor case 250 according to the first embodiment described above in that the partition wall portion 26 is replaced with a partition wall portion 26B. The partition wall portion 26B differs from the partition wall portion 26 in that the through hole 2640 is replaced with a through hole 2640B and that a through hole 2641B is added. The through holes 2640B, 2641B will be described later together with further details of the motor case 250B.

The cover member 252B according to the present embodiment differs from the cover member 252 according to the first embodiment described above in that the bottom portion 2521 and the bearing support portion 2524 are replaced with a bottom portion 2521B and a bearing support portion 2524B, respectively. The bottom portion 2521B will be described later together with further details of the cover member 252B.

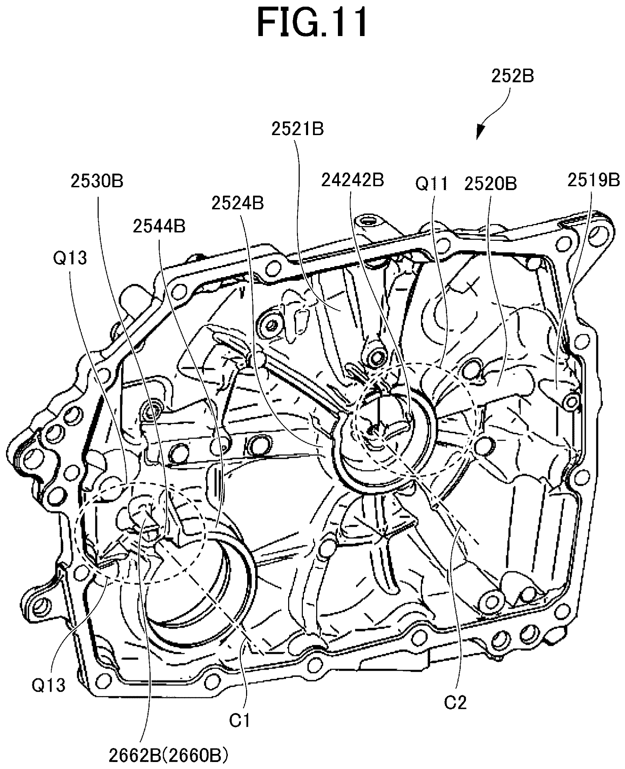

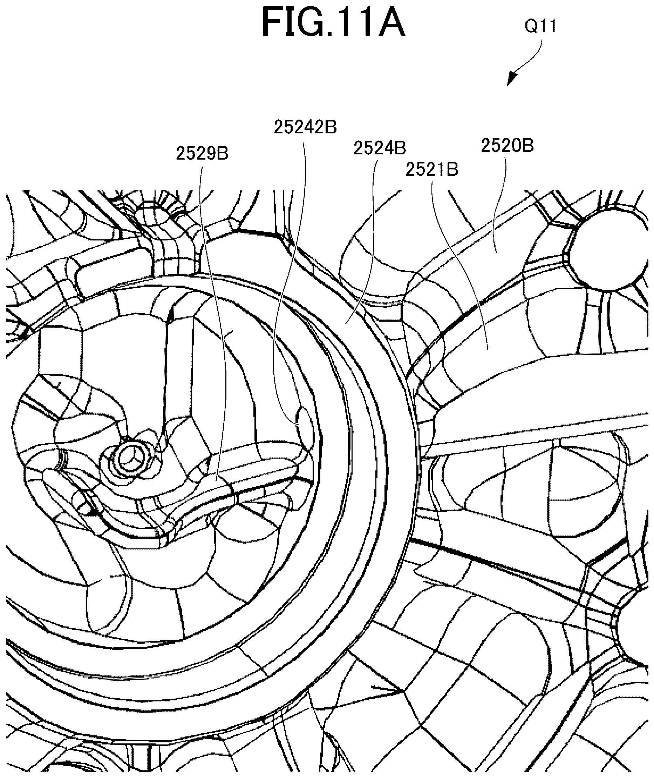

The bearing support portion 2524B differs from the bearing support portion 2524 according to the first embodiment described above in a manner in which a bearing 240B is supported. Specifically, as shown in FIG. 7, the bearing 240B is provided on the radially outer side at the end of a rotor shaft 15B on the axially first side A1. Specifically, in the bearing 240B, the radially inner side of an inner race is supported by the outer peripheral surface of the rotor shaft 15B, and the radially outer side of an outer race is supported by the cover member 252B (see FIG. 11).

A penetrating hole 25242B in the radial direction is formed in the bearing support portion 2524B. The penetrating hole 25242B penetrates the bearing support portion 2524B having a cylindrical form around the first axis C1 in the radial direction. The function of the penetrating hole 25242B will be described later.

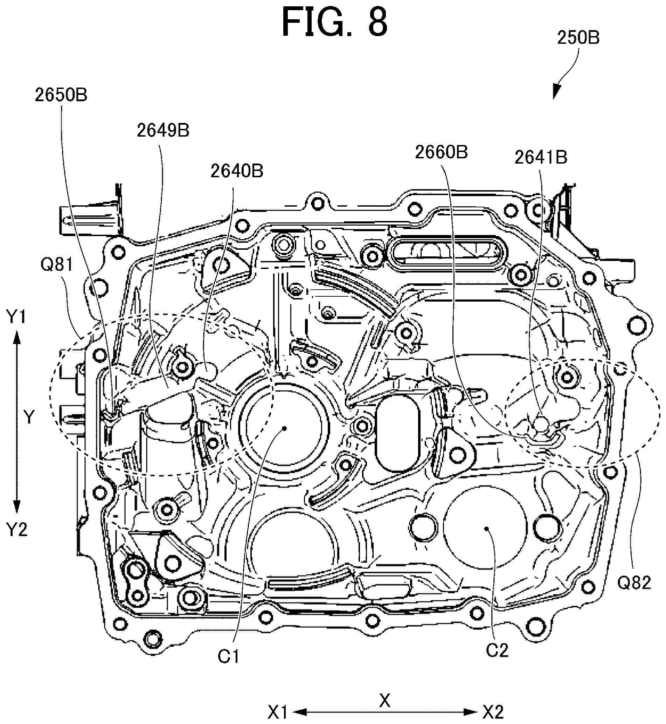

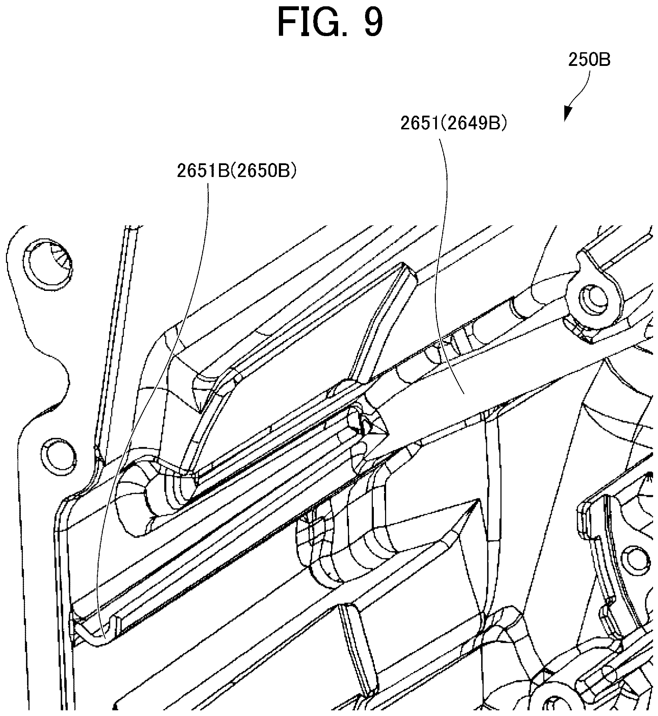

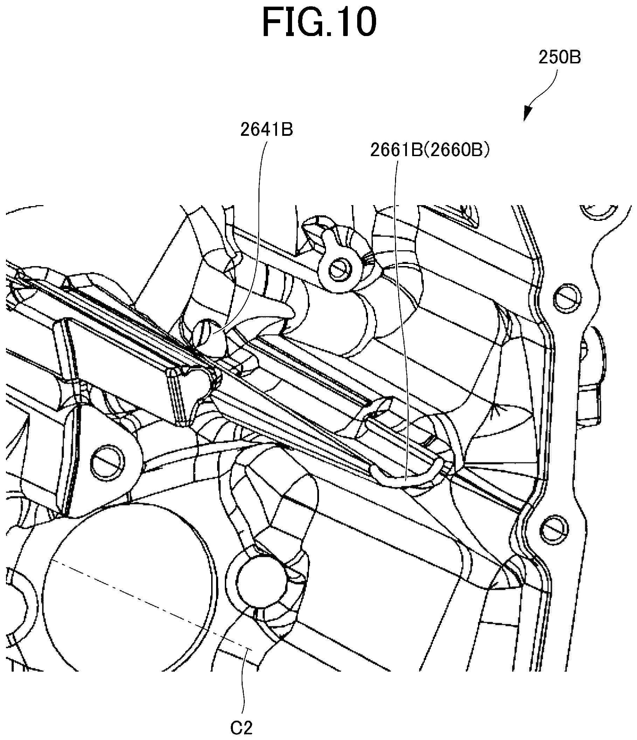

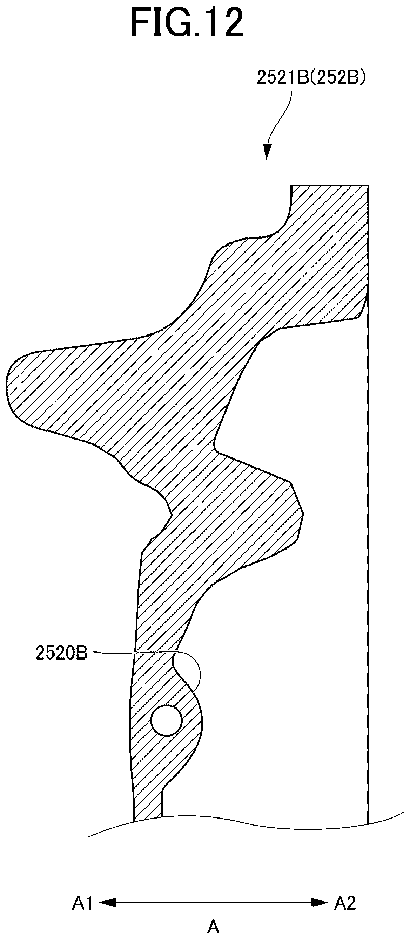

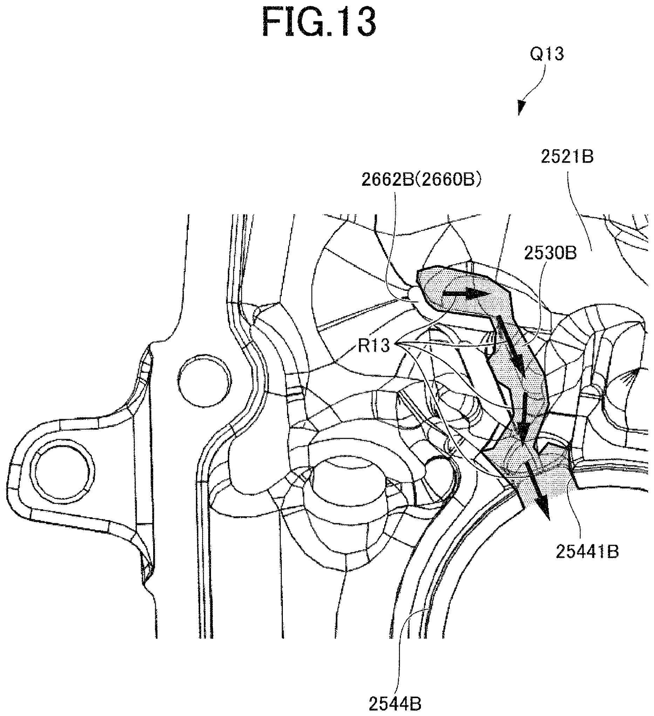

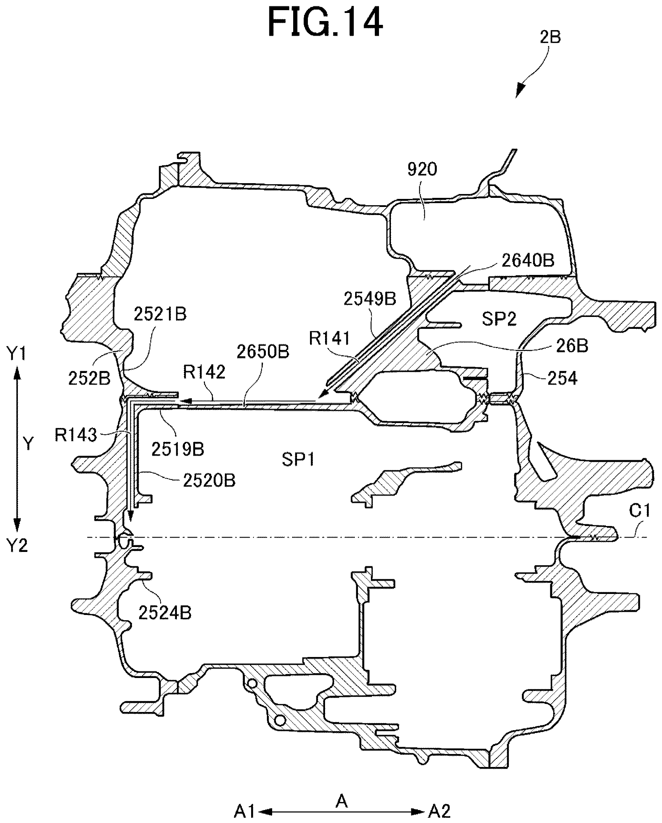

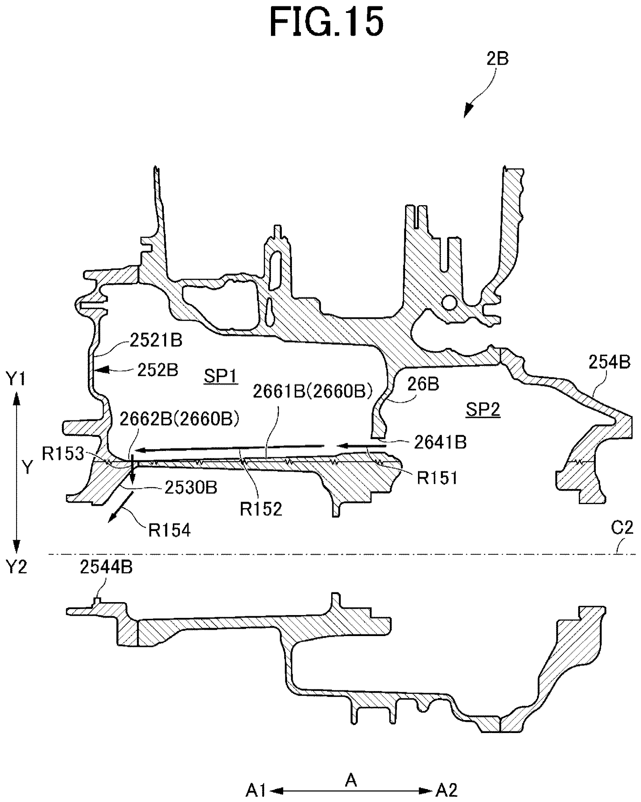

Next, an oil passage structure in the present embodiment (second embodiment) will be described with reference to FIG. 7A and subsequent drawings. Hereinafter, the motor housing chamber SP1 and the gear housing chamber SP2 described above are also referred to simply as the housing chamber SP unless otherwise distinguished. FIG. 8 is a plan view schematically showing a part of the motor case 250B as viewed in the axial direction from the axially first side A1. FIG. 9 is a perspective view showing a part of the motor case 250B (around a portion Q81 in FIG. 8), and FIG. 10 is a perspective view showing a part of the motor case 250B (around a portion Q82 in FIG. 8). FIG. 11 is a perspective view of the cover member 252B as viewed from the axially second side A2. FIG. 11A is a perspective view showing a part of the cover member 252B (around a portion Q11 in FIG. 11). FIG. 12 is a cross-sectional view taken along a plane (a plane perpendicular to the X direction) passing through a tubular portion 2520B formed in the bottom portion 2521B of the cover member 252B. FIG. 13 is a perspective view showing a part of the cover member 252B (around a portion Q13 in FIG. 8). In FIG. 13, the flow of oil is schematically shown by a hatched region and an arrow R13. FIG. 14 is a cross-sectional view of a main part of an oil passage structure in the case 2B, and is a view schematically showing the flow of oil to the bearing 240B by arrows R141 to R143. FIG. 15 is a cross-sectional view of a main part of the oil passage structure in the case 2B, and is a view schematically showing the flow of oil to the bearing 245 by arrows R151 to R154.

The oil passage structure according to the present embodiment differs from the oil passage structure according to the first embodiment described above mainly in the oil passage structure on the motor housing chamber SP1 side. Specifically, the oil passage structure according to the present embodiment is different in that the oil passage structure portion formed by the motor case 250 and the cover member 252 according to the first embodiment described above is replaced with an oil passage structure portion formed by the motor case 250B and the cover member 252B.

Specifically, the motor case 250B according to the present embodiment differs from the motor case 250 according to the first embodiment described above in that the section 2651 of the gutter portion 2650 is replaced with a gutter portion 2650B and a tubular portion 2549B is added.

The gutter portion 2650B according to the present embodiment has an extension range different from that of the gutter portion 2650 according to the first embodiment described above. Specifically, the gutter portion 2650B is a section formed in the motor case 250B. Unlike the section 2651 of the gutter portion 2650 according to the first embodiment described above, the gutter portion 2650B does not extend over the entire motor housing chamber SP1. That is, in the section 2651 of the gutter portion 2650 according to the first embodiment described above, the axially second side A2 extends to the partition wall portion 26, whereas in the gutter portion 2650B according to the present embodiment, the end on the axially second side A2 terminates before reaching the partition wall portion 26. In the gutter portion 2650B according to the present embodiment, the end on the axially second side A2 is continuous with a tubular portion 2519B (described later) of the cover member 252B.

Note that the gutter portion 2650B extends in the axial direction A, but does not need to extend parallel to the axial direction A. For example, the gutter portion 2650B may be slightly inclined in such a manner that the axially first side A1 is located on the lower side relative to the axially second side A2. In the gutter portion 2650B, the end on the axially first side A1 comes into contact with and is continuous with the opening of the tubular portion 2519B on the cover member 252B side (the opening on the axially second side A2) in the axial direction.

The tubular portion 2549B is in the form of being closed over the entire circumference in a cross section viewed in the axial direction A, and differs from the gutter portion 2650B that is open on the upper side. With the tubular portion 2549B, reliable guiding of oil from the through hole 2640B to the gutter portion 2650B is possible without being substantially affected by disturbance such as vibration during traveling of the vehicle. The tubular portion 2549B is integrally formed as a part of the case 2B, but may be formed as a separate piece. Note that the tubular portion 2549B extends in the axial direction A, but does not need to extend parallel to the axial direction A. For example, the tubular portion 2549B may be inclined in such a manner that the axially first side A1 is located on the lower side relative to the axially second side A2. The tubular portion 2549B may be formed as a part of the partition wall portion 26B. The end of the tubular portion 2549B on the axially second side A2 communicates with the through hole 2640B of the partition wall portion 26B.

The through hole 2640B is substantially similar to the through hole 2640 according to the first embodiment described above, communicates with the catch tank 920, and is supplied with the oil in the catch tank 920. In a modification, the through hole 2640B may function to guide the oil flowing along the partition wall portion 26B from the gear housing chamber SP2 side to the motor housing chamber SP1 side without passing through the catch tank 920.

The cover member 252B according to the present embodiment differs from the cover member 252 according to the first embodiment described above mainly in that the groove portion 2520 according to the first embodiment described above is replaced with a tubular portion 2520B and the section 2652 according to the first embodiment described above is replaced with a tubular portion 2519B, in addition to the point that the bearing support portion 2524 is replaced with the bearing support portion 2524B.

That is, the present embodiment is different in that the function of the section 2652 of the gutter portion 2650 in the cover member 252 according to the first embodiment described above is implemented by the tubular portion 2519B, and the function of the groove portion 2520 in the cover member 252 according to the first embodiment described above is implemented by the tubular portion 2520B.

Like the tubular portion 2549B described above, the tubular portion 2519B and the tubular portion 2520B are in the form of being closed over the entire circumference in cross-sectional view. As shown in FIGS. 11 and 12, the tubular portion 2519B and the tubular portion 2520B are preferably formed integrally with the bottom portion 2521B of the cover member 252B, but may be formed as a separate piece from the cover member 252B.

By forming the section 2652 of the gutter portion 2650 according to the first embodiment described above as the tubular portion 2519B, reliable guiding of oil from the gutter portion 2650B to the bearing 240B is possible without being substantially affected by disturbance such as vibration during traveling of the vehicle. In addition, by forming the groove portion 2520 according to the first embodiment described above as the tubular portion 2520B, reliable guiding of oil from the gutter portion 2650B to the bearing 240B is possible without being substantially affected by disturbance such as vibration during traveling of the vehicle.

The tubular portion 2519B extends in the axial direction, and the axially second side A2 is connected to the gutter portion 2650B. In the tubular portion 2519B, the axially first side A1 is continuous with the tubular portion 2520B.

The tubular portion 2520B extends in the radial direction with reference to the first axis C1 as viewed in the axial direction A. The end of the tubular portion 2520B on the radially outer side communicates with the axially first side A1 of the tubular portion 2519B. The end of the tubular portion 2520B on the radially inner side communicates with the penetrating hole 25242B of the bearing support portion 2524B. The tubular portion 2520B may be inclined in such a manner that the radially inner side is located on the lower side relative to the radially outer side. The tubular portion 2520B functions to guide oil from the tubular portion 2519B to the bearing 240B via the penetrating hole 25242B of the bearing support portion 2524B (see also an arrow R143 in FIG. 14). In this case, the oil can easily flow between the bearing 240B and the cover member 252B to the inner race side of the bearing 240B in the axial direction. As described above, such a flow of oil is suitable for the bearing 240B in which the inner race side rotates with the rotation of the rotor shaft 15B. The bearing 240B requires more lubrication than the bearing 245 due to supporting the rotor shaft 15B. Therefore, also from this viewpoint, the configuration in which the penetrating hole 25242B is provided is suitable.

In the illustrated example, as shown in FIGS. 11 and 11A, the bottom portion 2521B of the cover member 252 includes a bank portion 2529B, which extends from the vicinity of the penetrating hole 25242B toward the first axis C1 while protruding to the axially second side A2, on the radially inner side of the bearing support portion 2524B. Such a bank portion 2529B may have a function of guiding oil from the penetrating hole 25242B to the first axis C1.

As described above, according to the present embodiment, the oil scraped up above the bearing 240B in the gear housing chamber SP2 or the oil adhering to the upper portion (the second direction first side Y1) of the case 2B can be brought to the motor housing chamber SP1 side via the through hole 2640B, and then guided to the bearing 240B via the tubular portion 2549B, the gutter portion 2650B, and the tubular portions 2519B, 2520B. The movement of the oil at this time is caused by its own weight (positional energy) and can be achieved without use of an oil pump. Therefore, according to the present embodiment, it is possible to supply oil to a side farther from the scraping side (gear housing chamber SP2) in the axial direction A without use of an oil pump.

Furthermore, the motor case 250B according to the present embodiment differs from the motor case 250 according to the first embodiment described above in that a section 2661B forming a gutter portion 2660B different from the gutter portion 2650B is added. Hereinafter, for the sake of distinction, the gutter portion 2650B is also referred to as a first gutter portion 2650B, and the gutter portion 2660B is also referred to as a second gutter portion 2660B.

The second gutter portion 2660B may be formed of a tubular member separate from the case 2B, but is preferably formed in the case 2B. In the present embodiment, the second gutter portion 2660B is formed on the motor case 250B and the bottom portion 2521B of the cover member 252B in a manner continuous in the axial direction A. Specifically, the second gutter portion 2660B includes a section 2661B formed in the motor case 250B and a section 2662B formed in the cover member 252B, and these sections 2661B, 2662B are continuous in the axial direction A. Here, the second gutter portion 2660B can be formed integrally with the case 2B, and the number of parts and the number of manufacturing processes can be reduced compared to when the tubular member is separately provided. Note that a seal member may be disposed between the axial end surfaces of the section 2661B and the section 2662B aligned in the axial direction A, but the seal member may be omitted.

The second gutter portion 2660B has a function of guiding the oil entering the motor housing chamber SP1 from the through hole 2641B to the cover member 252B (see also an arrow R22 in FIG. 7A). For this purpose, the second gutter portion 2660B may extend in the horizontal direction, but may be inclined in such a manner that the axially first side A1 is on the lower side (second direction second side Y2) relative to the axially second side A2. In this case, even when the orientation of the vehicle changes to the assumed inclined orientation, the inclination angle may be set so that the axially first side A1 is on the lower side relative to the axially second side A2.

The second gutter portion 2660B extends above the second axis C2 and significantly extends above the bearing support portion 2544B. As can be seen from each of FIGS. 8 and 10, the second gutter portion 2660B has a form recessed downward (to the second direction second side Y2) in a cross-sectional view taken along a plane perpendicular to the axial direction A (i.e., XY plane). The second gutter portion 2660B may extend in a substantially equal recessed cross section (a cross section cut along the XY plane) along the axial direction A.

The second gutter portion 2660B may extend in the axial direction A to the partition wall portion 26B on the axially second side A2. The end of the second gutter portion 2660B on the partition wall portion 26B side (i.e., the end on the axially second side A2) communicates with the through hole 2641B of the partition wall portion 26B. For example, the second gutter portion 2660B may be provided below the through hole 2641B. At this time, the second gutter portion 2660B may be disposed relative to the through hole 2641B in such a manner that at least a part of the recessed cross section overlaps the through hole 2641B as viewed in the axial direction A.

The second gutter portion 2660B may extend in the axial direction A to the bottom portion 2521B of the cover member 252B on the axially first side A1. The end of the second gutter portion 2660B on the bottom portion 2521B side (i.e., the end on the axially first side A1) may communicate with a groove portion 2530B of the cover member 252B. The groove portion 2530B of the cover member 252B extends in the radial direction with reference to the second axis C2 as viewed in the axial direction A. The end of the groove portion 2530B on the radially outer side communicates with the axially first side A1 of the second gutter portion 2660B. The end of the groove portion 2530B on the radially inner side is connected to the bearing support portion 2544B. The groove portion 2530B functions to guide oil that drips from the second gutter portion 2660B by its own weight to the bearing 245 via the bearing support portion 2544B (see also an arrow R27 in FIG. 7A). Note that the radially inner side of the groove portion 2530B may terminate at a position in the vicinity of, but not reaching, the bearing support portion 2544B.

Note that the end of the second gutter portion 2660B on the bottom portion 2521B side (i.e., the end on the axially first side A1) may be opened radially inward by a notch or the like to promote the flow of oil from the second gutter portion 2660B to the groove portion 2530B. In this case, of the oil flowing through the second gutter portion 2660B, the amount of oil that can be guided to the bearing 245 via the groove portion 2530B can be effectively increased.

Alternatively, as in a modification illustrated in FIGS. 5 and 6, the second gutter portion 2660B may have a through hole at the end on the bottom portion 2521B side. In this case as well, of the oil flowing through the second gutter portion 2660B, the amount of oil that can be guided to the bearing 245 via the groove portion 2530B can be effectively increased.

In FIG. 15, the flow of oil from the second gutter portion 2660B to the bearing 245 (see FIG. 7A) is schematically shown by arrows R151 to R154.

In a modification, a part of the second gutter portion 2660B may be replaced with a tubular portion such as the tubular portion 2549B in the motor housing chamber SP1, similarly to the first gutter portion 2650B.

In the present embodiment, as shown in FIG. 13, the groove portion 2530B has a form recessed in the axial direction A on the axially first side A1. In this case, the oil can move obliquely downward (toward the bearing 245), as viewed in the axial direction A, along the lower side surface of the groove portion 2530B. However, in a modification, the groove portion 2530B may have a form recessed downward (to the second direction second side Y2) like the second gutter portion 2660B, or may have a tubular form like the tubular portion 2520B. The groove portion 2530B communicates with the bearing 245 (see FIG. 7A) via a notch 25441B formed in the peripheral wall portion of the bearing support portion 2544B (see FIG. 13).

As described above, according to the present embodiment, the oil scraped up above the bearing 245 in the gear housing chamber SP2 or the oil adhering to the upper portion (the second direction first side Y1) of the case 2B can be brought to the motor housing chamber SP1 side via the through hole 2641B, and then guided to the bearing 245 via the second gutter portion 2660B and the groove portion 2530B. The movement of the oil at this time is caused by its own weight (positional energy) and can be achieved without use of an oil pump. Therefore, according to the present embodiment, it is possible to supply oil to a side farther from the scraping side (gear housing chamber SP2) in the axial direction A without use of an oil pump.

Although each embodiment has been described in detail above, the present invention is not limited to a specific embodiment, and various modifications and changes can be made within the scope described in the claims. In addition, all or a plurality of the components of the embodiments described above can be combined.

### REFERENCE SIGNS LIST

100: Vehicle drive device, 1: Rotary electric machine (power source), 15: Rotor shaft (rotary shaft member), 16: Input member (rotary shaft member), 2: Case, 4: Counter gear mechanism (power transmission mechanism), 5: Differential gear mechanism (power transmission mechanism), 250: Motor case (case member), 252: Cover member (cover portion), 26: Partition wall portion, 30: Output gear (rotating body), 240: Bearing (shaft bearing), 2640: Through hole (first through hole), 2658A: Through hole (second through hole), 2650, 2650A, 2650B: Gutter portion (oil passage portion), 2520, 2520A: Groove portion, 2524: Bearing support portion (support portion), SP1: Motor housing chamber (first housing chamber), SP2: Gear housing chamber (second housing chamber), 2520B: Tubular portion, 2641B: Through hole (third through hole), 245: Bearing (second shaft bearing), 61: First output member (output member), 2660B: Gutter portion (second oil passage portion), and 2530B: Groove portion (second groove portion)

## Claims

1. A vehicle drive device, comprising:
a case that forms a housing chamber in which oil flows, the housing chamber including a first housing chamber and a second housing chamber adjacent to each other in an axial direction via a partition wall portion;
a power transmission mechanism that is disposed in the housing chamber and enables transmission of power from a power source to a wheel; and
an oil passage structure, at least a part of which is formed in the case,
wherein
the power transmission mechanism includes
a rotary shaft member that is disposed in the first housing chamber, extends in the axial direction, and rotates about an axis during power transmission, and
a rotating body that is disposed in the second housing chamber, rotates in conjunction with the rotary shaft member, and is configured to scrap up oil accumulated in a lower portion of the housing chamber,
an axial end of the rotary shaft member on a side farther from the partition wall portion in the axial direction is supported by the case via a shaft bearing, and
the oil passage structure includes an axially first through hole formed in the partition wall portion and an oil passage portion extending in the axial direction in the first housing chamber, and supplies oil scraped up by the rotating body in the second housing chamber to the shaft bearing via the first through hole and the oil passage portion.

2. The vehicle drive device according to claim 1, wherein the oil passage portion has a form recessed downward or a tubular form in a cross-sectional view taken along a plane perpendicular to the axial direction, and the oil passage portion is formed integrally with the case.

3. The vehicle drive device according to claim 1, wherein
the case includes a cover portion facing the partition wall portion in the axial direction,
the cover portion includes a support portion that supports the shaft bearing,
the oil passage structure further includes a groove portion or a tubular portion that is formed in the cover portion and configured to guide oil to the support portion, and
an end of the oil passage portion on a side closer to the partition wall portion in the axial direction communicates with the first through hole, and an end of the oil passage portion on a side farther from the partition wall portion in the axial direction communicates with the groove portion or the tubular portion of the cover portion.

4. The vehicle drive device according to claim 3, wherein
the oil passage portion further includes a second through hole penetrating in a vertical direction at the end on the side farther from the partition wall portion in the axial direction, and
the groove portion extends below the second through hole.

5. The vehicle drive device according to claim 1, wherein
the power source includes a rotary electric machine disposed in the first housing chamber, and
the rotary shaft member forms a rotary shaft of the rotary electric machine.

6. The vehicle drive device according to claim 5, wherein
the power transmission mechanism enables transmission of power from the rotary electric machine to the wheel via an output member disposed parallel to the rotary shaft member,
an axial end of the output member on a side farther from the partition wall portion in the axial direction is supported by the case via a second shaft bearing, and
the oil passage structure further includes an axially third through hole formed in the partition wall portion and a second oil passage portion extending in the axial direction in the first housing chamber, and oil scraped up by the rotating body in the second housing chamber is further supplied to the second shaft bearing via the third through hole and the second oil passage portion.
